# EUROPEAN PATENT APPLICATION

(11) **EP 1 184 754 A2**
(43) Date of publication of application: **06.03.2002**
(21) Application number: 01118601.2
(22) Date of filing: 02.08.2001
(51) Int. Cl.: G05B 19/042

(54) **Control system for a machine for producing hollow glass articles**

(30) Priority: 08.08.2000 IT TO000793
(71) Applicant: BOTTERO S.p.A., 12010 Cuneo (IT)
(72) Inventor: Nittardi, Bruno, 12011 Borgo San Dalmazzo (IT); Silvestro, Roberto, 12100 Cuneo (IT); Abelli, Fulvio, 12024 Costigliole Saluzzo (IT); Sesia, Carlo, 12100 Cuneo (IT)
(74) Representative: Boggio, Luigi

(57) **Abstract**

The control system is defined by at least one subsystem for controlling electric motors, and by a subsystem for controlling pneumatic article molding movements, each subsystems including a central unit (50, 51), a plurality of peripheral units (60, 61), and a second-level serial bus (56, 57) interposed between the respective central unit (50, 51) and respective peripheral units (60, 61). A first-level serial bus (54) is connected between the two central units (50, 51); the peripheral units (60, 61) are intelligent types; and the first-level bus (54) and second-level buses (56, 57) are "fieldbuses" in CANbus technology and employ a CANopen protocol.

## Description

The present invention relates to a control system for a so-called I.S. machine for producing hollow glass articles.

As is known, currently used machines for producing hollow glass articles normally have centralized architecture, in which all the input/output peripheral units are wired one by one on the rack connected to the centralized control system. That is, the peripheral units are connected directly to the centralized control system; and the centralized control system comprises dedicated central control units (CPUs) operating with other analog and digital input/output boards by means of a serial bus.

Though satisfactory at one time in terms of performance, the above architecture is no longer capable of handling all the functions now required or requested by users. In many applications, in fact, CPU times are critical, on account of the high time percentage required to perform elementary functions, such as reading and writing over the serial bus.

Moreover, using the above architecture, adding or changing functions is difficult if not impossible, so that developing new functions (such as weighing the articles produced) calls for additional CPUs, thus creating interface problems and making the architecture much more complex (and therefore less reliable). As a result, design, installation, wiring and maintenance of both the machine and relative documentation involve a good deal of time and cost.

It is an object of the present invention to provide a control system designed to eliminate the aforementioned drawbacks.

According to the present invention, there is provided a control system for a machine for producing hollow glass articles, characterized by, in combination:
a central control unit;
a plurality of intelligent peripheral units; and
a serial bus interposed between said central control unit and said intelligent peripheral units.

A non-limiting embodiment of the invention will be described by way of example with reference to the accompanying drawings, in which:
Figure 1 shows a block diagram of a system for producing hollow glass articles;
Figure 2 shows an overall block diagram of the control system according to the invention;
Figure 3 shows a more detailed block diagram of the control system according to the invention.

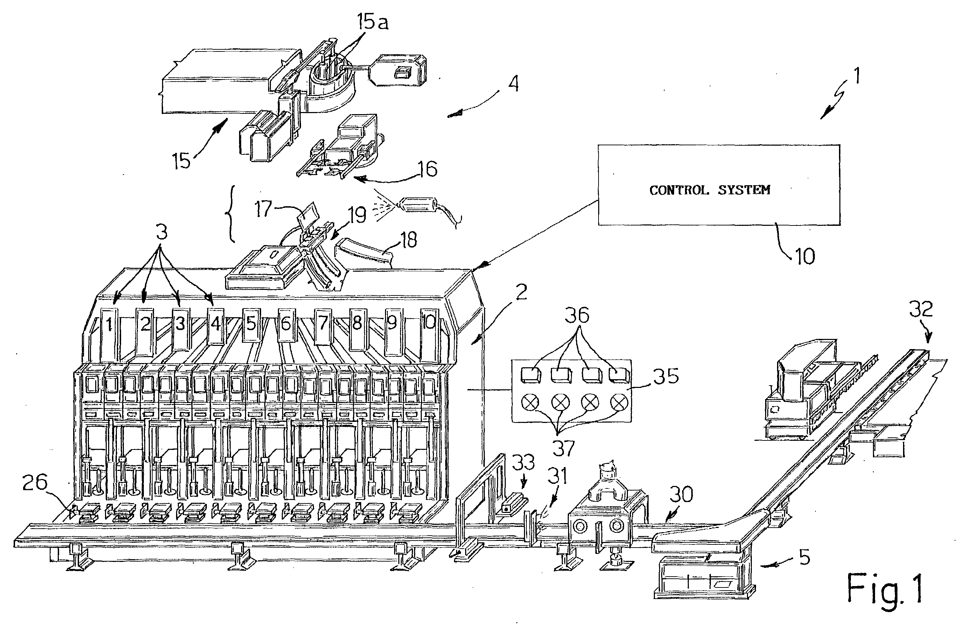

Number 1 in Figure 1 indicates a system for producing hollow glass articles, and which comprises a machine 2 and a control system 10.

Machine 2 is configured in known manner to produce a plurality of articles simultaneously. More specifically, machine 2 roughly comprises:
. a plurality of parallel central article-molding sections 3;
. a top section 4 - in the example shown, a single section - for forming and supplying glass gobs; and
. a single bottom section 5 for unloading and checking the articles.

Top section 4 comprises a molten glass feeder 15 connected to two punches 15a moving back and forth linearly to push the molten glass and form two beads; a scissor assembly 16 for cutting the glass beads into individual gobs; a plate 17 (so-called gob baffle) movable between a noninterference rest position and an intercepting work position in which it diverts the glass gobs away from the underlying members to an unloading channel 18, e.g. for cleaning; and a distributor 19 rotating in a given sequence to guide each glass gob to a given central section underneath.

Each central section 3 (not shown in detail in Figure 1) comprises a rough mold movable between an open and a closed position, receiving one glass gob at a time, and producing a semifinished glass article from each gob; an inverter unit, which grips the semifinished article and turns it over into a finish mold, also movable between an open and a closed position, and in which the hollow glass article is completed; a take-out device, which removes the finished articles from the finish mold and transfers them onto a fixed platform; and a pusher 26 for transferring the finished articles to bottom section 5.

Bottom section 5 is defined by a conveyor belt 5, which extends from the frame of machine 2 to a collecting section 32, and along which are installed various article checking units, such as load cells for weighing the articles, and a laser unit 33 for checking the position and size of the articles. In particular, an ejector 31 is provided along the path of conveyor belt 30 to remove any rejected articles off the belt.

Machine 2 is equipped with a panel 35 (shown only schematically) having a plurality of push-buttons 36 and indicator lights 37 relating to particular operating stages of machine 2. Push-buttons 36 can be operated by a technician, e.g. to stop the machine in an emergency, and each correspond to a respective indicator light 37.

The above members (feeder 15, scissor assembly 16, plate 17, distributor 19, rough and finish molds, inverter unit, take-out device, pusher 26, conveyor belt 30 and ejector 31) are controlled each, in known manner not shown in detail, by a respective electric motor or pneumatic actuator, in turn controlled by control system 10, which also handles the information received from sensors on machine 2 or the operator commands entered using push-buttons 36, and turns on indicator lights 37.

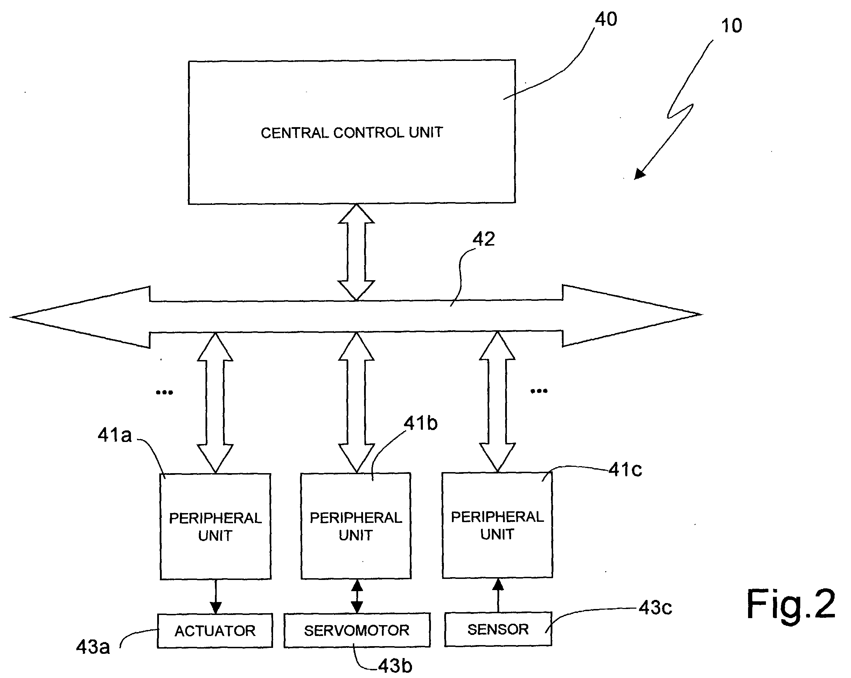

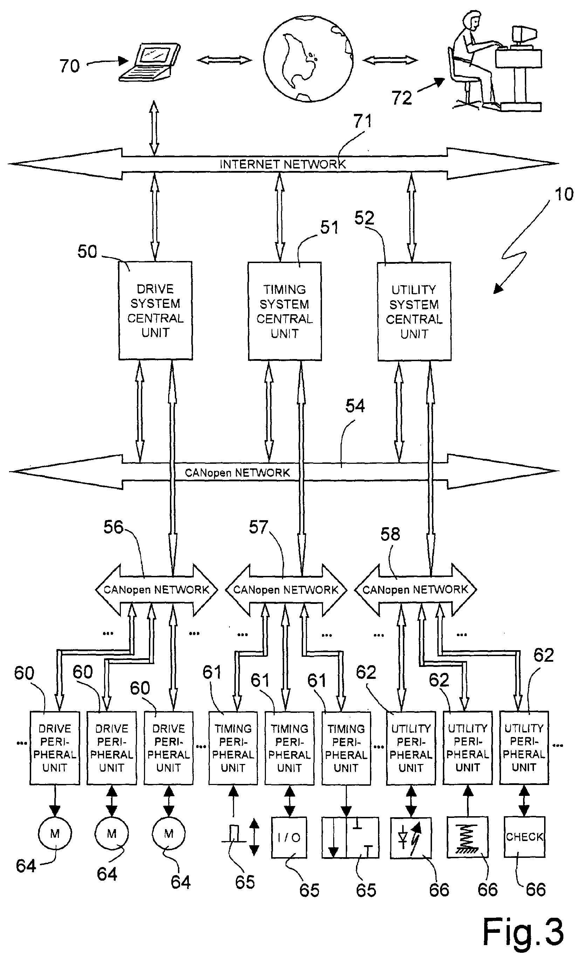

The overall structure of control system 10 is shown in Figure 2 and in detail in Figure 3.

As shown in Figure 2, control system 10 has a "fieldbus" architecture, including at least one central control unit 40 (e.g. an industrial PC with or without an operator interface) for process control; a plurality of intelligent peripheral units 41a, 41b, 41c; a serial bus ("fieldbus") 42 interposed between central control unit 40 and intelligent peripheral units 41a-41c; and a plurality of members 43a, 43b, 43c controlled by intelligent peripheral units 41a-41c or receiving information from them for local processing. For example, Figure 2 shows an actuator 43a (e.g. a solenoid valve for controlling one section) which receives control signals from respective intelligent peripheral unit 41a; a servomotor 43b (e.g. for controlling distributor 19) which exchanges control/feedback signals with respective intelligent peripheral unit 41b; and a sensor 43c (e.g. a load cell) which transmits signals, relative to detected quantities, to respective intelligent peripheral unit 41c (e.g. the weight of the article on the load cell at that time).

Figure 3 shows a preferred embodiment of the Figure 2 architecture, which presupposes dividing machine 2 into three separate machine systems: a drive system controlling the electric motors of machine 2; a timing system controlling pneumatic article molding movements; and a utility system for accessory checks.

Control system 10 in Figure 3 therefore comprises three separate central units 50, 51, 52 for the drive system, timing system and utility system respectively; and a two-level fieldbus structure comprising a first-level bus 54 connecting the various central units, and three second-level buses 56-58, each connecting a respective central unit 50-52 to respective peripheral units 60-62. In this case, too, peripheral units 60-62 are intelligent types to decentralize local decision-making processes wherever possible and reduce the computing load of central units 50-52.

Both first-level bus 54 and second-level buses 56-58 are preferably CANbus-technology, CANopen-protocol "fieldbuses", which provide a four-wire connection and implement a communication protocol between central units 50-52 (first-level bus 54) and between each central unit 50-52 and respective peripheral units 60-62 (second-level buses 56-58).

Peripheral units 60, connected to the drive central unit 50 over second-level bus 56, each control operation of a respective motor or servomotor 64 of machine 2 by supplying control signals and, if provided for, receiving relative operating signals. More specifically, peripheral units 60 control, among other things, the following motors and relative inputs/outputs (start, stop, emergency, fault, etc.): feeder and rotary-tube motor; distributor and scissor assembly motor; conveyor motor; electronic-distributor servomotor; electronic-punch servomotor; electronic-scissor servomotor; pusher motor; inverter unit servomotor; take-out servomotor.

Peripheral units 61, connected to timing central unit 51 over second-level bus 57, are each connected to a respective member 65 for controlling pneumatic article molding movements and transmitting user commands. For example, peripheral units 61 are connected to the following members: solenoid valves controlling the pneumatic motors; section control push-buttons; machine control push-buttons; generic customer inputs and outputs.

Peripheral units 62, connected to utility central unit 52 over second-level bus 58, are each connected to a respective utility member 66 and exchange with them control and detection signals. For example, peripheral units 62 are connected to the following members: lasers for checking the position and size of the articles and respective inputs/outputs; load cells for weighing the articles; and a device for controlling the height and position of the rotary tube as a function of the weight of the articles.

In Figure 3, central units 50-52 are connected, over a centralized network 71 (e.g. an Ethernet network - registered trademark), to a main monitor 70, which is also connected, over a national/international communications system shown symbolically, to a remote technical assistance station 72, e.g. for real-time controlling operation of the machine and remote fault-finding.

The information to be made available to central units 50-52 and peripheral units 60-62 is thus routed along first-level bus 54; while the local information only used within each machine system (drive, timing, utility) is routed along the respective second-level bus 56, 57, 58 and is only shared within the machine system concerned. Diagnostic information ensuring correct operation of machine 2 is shared by the whole of control system 10. For example, in the event of a fault on an actuator or member 64, 65 essential to the operation of machine 2, the fault information can be transferred immediately from the respective peripheral unit to all the peripheral units 60-62, even those forming part of different machine systems, to command immediate performance of any necessary safety operations or even to shut down machine 2 entirely.

The advantages of the control system described are as follows:
. fewer production system cables and easier wiring;
. faster design, testing, delivery and start-up;
. lower cost;
. easy control system expansion by simply extending the network, with no need to revise the entire control system to accommodate additional peripheral units;
. interchangeable peripheral units, by CANopen protocol buses permitting connection to elements of any make;
. network connection of the various machine systems, by all the information common to the various machine systems being available over one dedicated channel (first-level bus 54) with no additional wiring;
. redundant control facility: two central control units can be provided for each machine system, and control switched from one to the other in the event of fault, without stopping the machine;
. decentralization of the control system, by the control panel containing the central unit, and the peripheral units being located in field close to the relative actuators;
. remote help Internet connection over an Ethernet network.

Clearly, changes may be made to the control system as described herein without, however, departing from the scope of the present invention. In particular, it may also be used for machines other than the one described, e.g. with a double top feed section, with 1 to 4 punches 15 (each producing a respective bead), and with a different number of molds (according to the number of glass gobs).

## Claims

1. A control system (10) for a machine (2) for producing hollow glass articles, **characterized by**, in combination:
a central control unit (40) ;
a plurality of intelligent peripheral units (41a, 41b, 41c); and
a serial bus (42) interposed between said central control unit (40) and said intelligent peripheral units (41a, 41b, 41c).

2. A control system as claimed in Claim 1, **characterized in that** said bus (42) is a "fieldbus".

3. A control system as claimed in Claim 2, **characterized in that** said bus (42) is in CANbus technology and employs a CANopen protocol.

4. A control system as claimed in any one of the foregoing Claims, **characterized by** at least one subsystem for controlling electric motors; and in that said subsystem for controlling electric motors comprises a drive central unit (50), a plurality of drive peripheral units (60), and a second-level drive bus (56) interposed between said drive central unit and said drive peripheral units.

5. A control system as claimed in any one of the foregoing Claims, **characterized by** a subsystem for controlling pneumatic article molding movements.

6. A control system as claimed in any one of the foregoing Claims, **characterized by** at least one subsystem for controlling electric motors, and a subsystem for controlling pneumatic article molding movements; and in that said subsystem for controlling electric motors comprises a drive central unit (50), a plurality of drive peripheral units (60), and a second-level drive bus (56) interposed between said drive central unit and said drive peripheral units.

7. A control system as claimed in Claim 6, **characterized in that** said drive peripheral units (60) are intelligent types and are each connected to a respective motor (64) in the group comprising: feeder and rotary-tube motor; distributor and scissor motor; conveyor motor; electronic-distributor servomotor; electronic-punch servomotor; electronic-scissor servomotor; pusher motor; inverter servomotor; and take-out servomotor.

8. A control system as claimed in Claim 6 or 7, **characterized in that** said subsystem for controlling pneumatic article molding movements comprises a timing central unit (51), a plurality of timing peripheral units (61), and a second-level timing bus (57) interposed between said timing central unit (51) and said timing peripheral units (61).

9. A control system as claimed in Claim 8, **characterized by** a first-level bus (54) connected to said drive central unit (50) and to said timing central unit (51).

10. A control system as claimed in Claim 8 or 9, **characterized in that** said timing peripheral units (61) are intelligent types and are each connected to a respective actuator (65) in the group comprising: solenoid valves; section control push-buttons; machine control push-buttons; generic inputs and outputs.

11. A control system as claimed in any one of Claims 6 to 10, **characterized by** a utility control subsystem comprising a utility central unit (52), a plurality of utility peripheral units (62), and a second-level utility bus (58) interposed between said utility central unit (52) and said utility peripheral units (62).

12. A control system as claimed in Claim 11 when dependent on Claim 9, **characterized in that** said first-level bus (54) is connected to said utility central unit (52).

13. A control system as claimed in Claim 11 or 12, **characterized in that** said utility peripheral units (62) are intelligent types and are each connected to a respective checking element (66) in the group comprising: lasers for checking the position and size of the articles and respective inputs/outputs; load cells; and a device for controlling the height and position of rotary members.
